# EUROPEAN PATENT SPECIFICATION

(11) **EP 3 578 969 B1**
(45) Date of publication and mention of the grant of the patent: **22.11.2023**
(21) Application number: 18875020.2
(22) Date of filing: 11.04.2018
(51) Int. Cl.: G01N 30/60, G01N 1/34, G01N 1/40

(54) **RAPID SCREENING TUBULAR COLUMN**
RÖHRENSÄULE MIT SCHNELLER ABTASTUNG
COLONNE TUBULAIRE À CRIBLAGE RAPIDE

(43) Date of publication of application: 11.12.2019
(73) Proprietor: Great Engineering Technology Corp., Kaohsiung City, Taiwan 813 (TW)
(72) Inventor: LEE, Chin-Shan, Kaohsiung City, Taiwan 813 (CN); HSIAO, Wen-Jui, Kaohsiung City, Taiwan 813 (CN)
(74) Representative: Viering, Jentschura & Partner mbB Patent- und Rechtsanwälte
(86) International application number: PCT/CN2018/082588
(87) International publication number: WO 2019/196023

(56) References cited:
- WO-A1-01/98748
- WO-A1-2010/068277
- WO-A1-2016/151947
- CN-A- 103 048 400
- CN-A- 107 281 780
- CN-U- 205 360 676
- CN-U- 205 374 395
- JP-A- 2009 250 862
- JP-U- 3 187 642
- US-A1- 2009 056 541

## Description

### BACKGROUND OF THE INVENTION

### 1. Field of the Invention

The present invention relates to a quick extraction kit for testing pesticide residues or veterinary drug residues, and more particularly to the column structure of a quick extraction kit.

### 2. Description of the Related Art

For the analysis and detection of pesticide residues in agricultural products or of veterinary drug residues in animal products, the existing test method is to take a sample from the object first. Then, a sample preparation is made by a so-called QuEChERS ("Quick, Easy, Cheap, Effective, Rugged, and Safe") method to obtain the liquid sample after the water removal and purification. After that, the liquid sample is processed into the test liquid for the instrument inspection. Then, the test liquid is examined by instruments, such as LC/MS-MS or GC/MS-MS. Finally, according to the data processing of the instrument test result, the result of the analysis and detection of pesticide or veterinary drug residues is determined.

However, it takes hours to obtain the liquid sample through the QuEChERS method. To solve this problem, a quick extraction kit has been developed as disclosed in TW I500915. However, the existing quick extraction kit has poor sealing performance, and the cap of the quick extraction kit can easily fall off from the column, and is fragile in structure.

Some further designs are known form JP 3 187642 U, from US 2009/056541 A1, from WO 2010/068277 A1, and from WO 01/98748 A1. JP 3 187642 U discloses a quick extraction kit comprising a column, having an interior space, a lower tube at its bottom communicating with the interior space, and an opening communicating with the interior space at its top, wherein the lower tube has an outlet at its bottom; an annular flange disposed around the opening of the column and extending radially, wherein a diameter of the annular flange is larger than the column; and a cap including a base plate, an upper tube extending upward from a top surface of the base plate, a pair of reinforcing ribs formed on the top surface of the base plate, wherein the upper tube of the cap in communication with the interior space of the column and having an inlet, a bottom surface of each reinforcing ribs integrated with the top surface of the base plate, an inner side surface of each reinforcing ribs adjacent to the bottom surface and integrated with a peripheral side surface of the upper tube.

### SUMMARY OF THE INVENTION

To solve the aforementioned problems, the present invention provides a new quick extraction kit as defined in claim 1. Further optional features are defined in dependent claims 2-5.

The present invention provides a new quick extraction kit having excellent sealing performance between the column and the cap, and the cap durable in structure and not easy to fall off, which can solve the existing problems of the quick extraction kit described above.

### BRIEF DESCRIPTION OF THE DRAWINGS

FIG. 1 is a perspective view of a quick extraction kit in accordance with one embodiment of the present invention;
FIG. 2 is a cross-sectional view of the quick extraction kit in accordance with one embodiment of the present invention;
FIG. 3 is an exploded perspective view of the quick extraction kit in accordance with one embodiment of the present invention (the extraction and cleanup materials are not shown).

### ELEMENT LABEL

Column 1
opening 100
lower tube 11
outlet 110
entrance 111
coupling pipe 12
annular gap 13
connection portion 14
annular flange 15
upper protrusion 151
enclosing wall 16
reinforcing rib 17
cap 2
base plate 21
lower protrusion 211
upper tube 22
inlet 220
annular cylindrical portion 23
connecting portion 24
rib 25
cleanup materials 3
filter 30
upper mixed powder 31
lower mixed powder 32

### DETAILED DESCRIPTION OF EMBODIMENTS

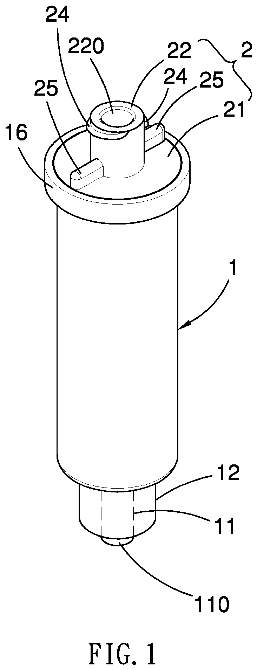

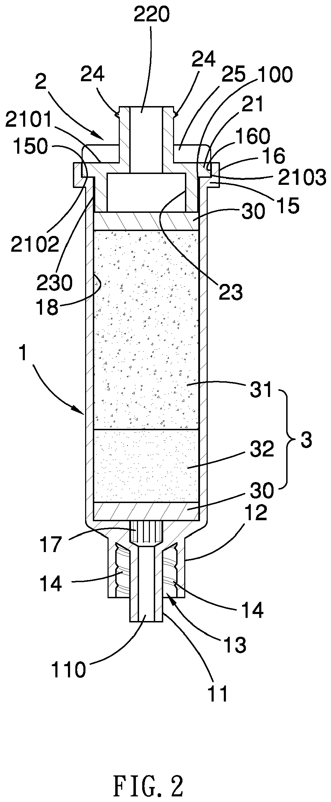

Referring to FIGS. 1 and 2, there is shown an embodiment of the quick extraction kit of the present invention, comprising a column 1 and a cap 2. The column 1 has an interior space filled with extraction and cleanup materials 3, an outlet 110 at a bottom. The cap 2 is disposed on top of the column 1 and has an inlet220. As shown in FIG. 2, a sample solution enters from the inlet220 into the column 1, and after passing downward and through the extraction and cleanup materials 3, exits the outlet 110 to form a liquid sample. The sample can be extracted from agricultural or animal products. The liquid sample is ready for the test of liquid chromatography-mass spectrometry (LC-MS) or gas chromatography-mass spectrometry (GC-MS) to determine if the pesticide residues in agricultural products or veterinary drug residues in animal products meet the standard, wherein the sample solution may be prepared in a method as disclosed in TW I 500915. The extraction and cleanup materials 3 primarily include upper mixed powder 31 and lower mixed powder 32, optionally include one or a plurality of filter 30. The structure, composition and function of the extraction and cleanup materials 3 are disclosed in the TW patent and will not be discussed further here.

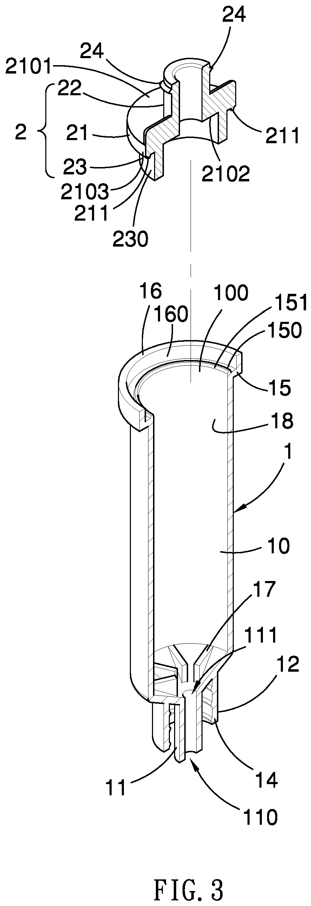

The column 1 has at its bottom a lower tube 11 and a coupling pipe 12 surrounding the lower tube 11. The lower tube 11 communicates with the interior space 10 and an annular gap 13 is formed between the lower tube 11 and the coupling pipe 12. An inner wall of the coupling pipe 12 forms a connection portion 14. In the embodiment, the connection portion 14 can be an internal screw thread, which can be single-start threaded or multi-start threaded, optionally be double-start threaded, to be screwed to the cap 2 of the present invention or to other equipment or objects having the external screw thread, wherein the lower tube 11 has the outlet 110 at its bottom, and optionally projects outside the coupling pipe 12. Moreover, as shown in FIG. 3, at the opening 100 at the top of column 1, an annular flange 15 surrounding the opening 100 is formed and the enclosing wall 16 surrounding the annular flange 15 is formed. Optionally, the column 1 has a plurality of reinforcing ribs 17 at a bottom of the interior space. The reinforcing ribs 17 are separately arranged in a circle surrounding an entrance 111 of the lower tube 11.

The cap 2 includes a base plate 21, an upper tube 22 extending upward from a top surface of the base plate 21, a pair of reinforcing ribs 25 formed on the base plate 21, and an annular cylindrical portion 23 on the lower surface of the base plate 21. The base plate 21 lies within the enclosing wall 16 of the column 1. The outer wall of the upper tube 22 has a connecting portion 24. And an inlet 220 is formed at the top of the upper tube 22, wherein the annular cylindrical portion 23 lies within the opening 100 at the top of the column 1. The connecting portion 24 is configured to match the connection portion 14 of the column 1, so that the connecting portion 24 can be engaged with the coupling pipe 12 of other quick extraction kit. In this embodiment, the connecting portion 24 can be an external screw thread, such as a single-start thread or a multi-start thread, optionally a double-start thread to be screwed to the connection portion 14 (internal screw thread) of the coupling pipe of other quick extraction kit of the present invention or to other equipment or objects having the corresponding internal screw thread, wherein the cap 2 is an integral structure. A bottom surface of each reinforcing ribs 25 are integrated with the top surface of the base plate 21. An inner side surface of each reinforcing ribs 25 is adjacent to the bottom surface and integrated with a peripheral side surface of the upper tube 22.

As shown in FIG. 3, a lower protrusion 211 is installed near to the periphery of the lower surface of the base plate 21 of the cap 2. An upper protrusion 151 is installed on the annular flange 15 of the column 1 and near to the opening 100. After a spin welding process of the cap 2 and the column 1, the lower protrusion 211 and the upper protrusion 151 are welded together to form a sealing joint (not shown). The sealing joint is located in between the lower surface of the base plate 21 and the top surface of the annular flange 15 to create the seal between the cap 2 and the column 1.

As described above, the quick extraction kit of the present invention has an excellent leak proof construction between the column 1 and the cap 2. Besides, the cap 2 is durable and can be secured on the column 1, without falling off easily.

In conclusion, the quick extraction kit of the present invention has excellent sealing performance between the column 1 and the cap 2, and the cap 2 is durable in structure and not easy to fall off, which can solve the existing problems of the quick extraction kit described above.

## Claims

1. A quick extraction kit comprising:
a column (1), having an interior space filled with extraction and cleanup materials (3), a lower tube (11) at its bottom communicating with the interior space, and an opening (100) communicating with the interior space at its top , wherein the lower tube (11) has an outlet (110) at its bottom;
an annular flange (15) disposed around the opening (100) of the column (1) and extending radially, wherein a diameter of the annular flange (15) is larger than the column (1);
a vertical enclosing wall (16) integrally connected to the annular flange (15) and surrounding the annular flange (15), wherein an inner diameter of the enclosing wall (16) is larger than the opening (100) of the column (1); and
a cap (2) including a base plate (21), an upper tube (22) extending upward from a top surface (2101) of the base plate (21), a pair of reinforcing ribs (25) formed on the top surface (2101) of the base plate (21), and an annular cylindrical portion (23) connected to a lower surface (2102) of the base plate (21), wherein the top surface (2101) of the base plate (21) faces contrary to the column (1); the lower surface (2102) of the base plate (21) covers the opening (100) of the column (1) and is supported by a top surface (150) of the annular flange (15); a periphery (2103) of the base plate (21) engages with an inner surface (160) of the enclosing wall (16); the annular cylindrical portion (23) is located within the interior space of the column (1); an outer surface (230) of the annular cylindrical portion (23) engages with an inner surface (18) of the column (1); a rotary welding seal joint is formed between the lower surface of the base plate (21) and the top surface of the flange (15), the upper tube (22) of the cap (2) in communication with the interior space of the column 1 and having an inlet (220), a bottom surface of each reinforcing ribs (25) integrated with the top surface of the base plate (21), an inner side surface of each reinforcing ribs (25) adjacent to the bottom surface and integrated with a peripheral side surface of the upper tube (22).

2. The quick extraction kit according to claim 1, wherein the upper tube 22 of the cap 2 has a connecting portion 24; the bottom of the column 1 has a coupling pipe 12 surrounding the lower tube 11; an inner wall of the coupling pipe 12 forms a connection portion 14; an annular gap 13 is formed between the inner wall of the coupling pipe 12 and the lower tube 11; the connection portion 24 of the upper tube 22 and the connecting portion 14 of the coupling pipe 12 are configured in shape to match each other.

3. The quick extraction kit according to claim 2, wherein the connecting portion 24 of the upper tube 22 is an external screw thread; the connection portion 14 of the coupling pipe 12 of the column 1 is an internal screw thread screwable into the external screw thread.

4. The quick extraction kit according to claim 3, wherein the column 1 has a plurality of reinforcing ribs 17 at a bottom of the interior space; an entrance 111 is formed at the top of the lower tube 11; the reinforcing ribs 17 are arranged in a circle surrounding the entrance 111 of the lower tube 11.

5. The quick extraction kit according to claim 4, wherein a lower end of the lower tube 11 projects outside the coupling pipe 12.

## Patentansprüche

1. Schnell-Extraktion-Kit, aufweisend:
eine Säule (1), welche einen Innenraum, welcher mit Extraktion- und Reinigung-Materialien (3) gefüllt ist, an ihrem unteren Teil ein unteres Rohr (11), welches mit dem Innenraum in Verbindung steht, und eine Öffnung (100) hat, welche mit dem Innenraum an seinem oberen Ende in Verbindung steht, wobei das untere Rohr (11) einen Auslass (110) an seinem unteren Teil hat,
einen ringförmigen Flansch (15), welcher um die Öffnung (100) der Säule (1) herum angeordnet ist und sich radial erstreckt, wobei ein Durchmesser des ringförmigen Flansches (15) größer als die Säule (1) ist,
eine vertikale Umschließungswand (16), welche mit dem ringförmigen Flansch (15) integral verbunden ist und den ringförmigen Flansch (15) umgibt, wobei ein Innendurchmesser der Umschließungswand (16) größer als die Öffnung (100) der Säule (1) ist, und
eine Kappe (2), welche eine Basisplatte (21), ein oberes Rohr (22), welches sich von einer oberen Fläche (2101) der Basisplatte (21) aus nach oben hin erstreckt, ein Paar von Verstärkungsrippen (25), welche an der oberen Fläche (2101) der Basisplatte (21) gebildet sind, und einen ringförmigen zylindrischen Abschnitt (23) aufweist, welcher mit einer unteren Fläche (2102) der Basisplatte (21) verbunden ist, wobei die obere Fläche (2101) der Basisplatte (21) in die entgegengesetzte Richtung als zu der Säule (1) hin zeigt, wobei die obere Fläche (2102) der Basisplatte (21) die Öffnung (100) der Säule (1) bedeckt und mittels einer oberen Fläche (150) des ringförmigen Flansches (15) getragen wird, wobei ein Umfangsbereich (2103) der Basisplatte (21) mit einer Innenfläche (160) der Umschließungswand (16) in Eingriff steht, wobei sich der ringförmige zylindrische Abschnitt (23) innerhalb von dem Innenraum der Säule (1) befindet, wobei eine Außenfläche (230) des ringförmigen zylindrischen Abschnitts (23) mit einer Innenfläche (18) der Säule (1) in Eingriff steht, wobei eine Rotation-Schweißen-Dichtung-Verbindung zwischen der unteren Fläche der Basisplatte (21) und der oberen Fläche des Flansches (15) gebildet ist, wobei das obere Rohr (22) der Kappe (2) mit dem Innenraum der Säule (1) in Verbindung steht und einen Einlass (220) aufweist, wobei eine untere Fläche von jeder von den Verstärkungsrippen (25) in die obere Fläche der Basisplatte (21) integriert ist, wobei eine innere Seitenfläche von jeder von den Verstärkungsrippen (25) zu der unteren Fläche benachbart ist und in eine Umfangsbereich-Seitenfläche des oberen Rohrs (22) integriert ist.

2. Schnell-Extraktion-Kit gemäß Anspruch 1, wobei das obere Rohr (22) der Kappe (2) einen Verbindungsabschnitt (24) hat, der untere Teil der Säule (1) ein Verbindungsrohr (12) hat, welches das untere Rohr (11) umgibt, eine Innenwand des Verbindungsrohrs (12) einen Verbindungsabschnitt (14) bildet, ein Ringspalt (13) zwischen der Innenwand des Verbindungsrohrs (12) und dem unteren Rohr (11) gebildet ist, der Verbindungsabschnitt (24) des oberen Rohrs (22) und der Verbindungsabschnitt (14) des Verbindungsrohrs (12) konfiguriert sind, um hinsichtlich ihrer Form zueinander zu passen.

3. Schnell-Extraktion-Kit gemäß Anspruch 2, wobei der Verbindungsabschnitt (24) des oberen Rohrs (22) ein Außengewinde ist, wobei der Verbindungsabschnitt (14) des Verbindungsrohrs (12) der Säule (1) ein in das Außengewinde einschraubbares Innengewinde ist.

4. Schnell-Extraktion-Kit gemäß Anspruch 3, wobei die Säule (1) mehrere Verstärkungsrippen (17) an einem unteren Teil des Innenraums hat, wobei ein Eingang (111) an dem oberen Teil des unteren Rohrs (11) gebildet ist, wobei die Verstärkungsrippen (17) in einem Kreis angeordnet sind, welcher den Eingang (111) des unteren Rohrs (11) umgibt.

5. Schnell-Extraktion-Kit gemäß Anspruch 4, wobei ein unteres Ende des unteren Rohrs (11) außerhalb von dem Verbindungsrohr (12) hervorsteht.

## Revendications

1. Kit d'extraction rapide, comprenant :
une colonne (1), ayant un espace intérieur rempli de matériaux d'extraction et de nettoyage (3), un tube inférieur (11) à sa partie inférieure communiquant avec l'espace intérieur, et une ouverture (100) communiquant avec l'espace intérieur à sa partie supérieure, le tube inférieur (11) ayant une sortie (110) à sa partie inférieure;
une bride annulaire (15) disposée autour de l'ouverture (100) de la colonne (1) et s'étendant radialement, un diamètre de la bride annulaire (15) étant supérieur à la colonne (1);
une paroi d'enceinte verticale (16) intégralement connectée à la bride annulaire (15) et entourant la bride annulaire (15), un diamètre intérieur de la paroi d'enceinte (16) étant supérieur à l'ouverture (100) de la colonne (1); et
un capuchon (2) comprenant une plaque de base (21), un tube supérieur (22) s'étendant vers le haut à partir d'une surface supérieure (2101) de la plaque de base (21), une paire de nervures de renforcement (25) formées sur la surface supérieure (2101) de la plaque de base (21), et une partie cylindrique annulaire (23) connectée à une surface inférieure (2102) de la plaque de base (21), où la surface supérieure (2101) de la plaque de base (21) fait face à l'opposé de la colonne (1) ; la surface inférieure (2102) de la plaque de base (21) couvre l'ouverture (100) de la colonne (1) et est supportée par une surface supérieure (150) de la bride annulaire (15) ; une périphérie (2103) de la plaque de base (21) est en prise avec une surface intérieure (160) de la paroi d'enceinte (16) ; la partie cylindrique annulaire (23) est située dans l'espace intérieur de la colonne (1) ; une surface extérieure (230) de la partie cylindrique annulaire (23) est en prise avec une surface intérieure (18) de la colonne (1) ; un joint d'étanchéité par soudage rotatif est formé entre la surface inférieure de la plaque de base (21) et la surface supérieure de la bride (15), le tube supérieur (22) du capuchon (2) en communication avec l'espace intérieur de la colonne (1) et ayant une entrée (220), une surface inférieure de chaque nervure de renforcement (25) intégrée à la surface supérieure de la plaque de base (21), une surface latérale intérieure de chaque nervure de renforcement (25) adjacente à la surface inférieure et intégrée à une surface latérale périphérique du tube supérieur (22).

2. Kit d'extraction rapide selon la revendication 1, dans lequel le tube supérieur 22 du capuchon 2 présente une partie de connexion 24 ; la partie inférieure de la colonne 1 présente un tube de couplage 12 entourant le tube inférieur 11 ; une paroi intérieure du tube de couplage 12 forme une partie de connexion 14 ; un espace annulaire 13 est formé entre la paroi intérieure du tube de couplage 12 et le tube inférieur 11 ; la partie de connexion 24 du tube supérieur 22 et la partie de connexion 14 du tube de couplage 12 sont configurées en forme pour s'adapter l'une à l'autre.

3. Kit d'extraction rapide selon la revendication 2, dans lequel la partie de connexion 24 du tube supérieur 22 est un filet de vis externe ; la partie de connexion 14 du tube de couplage 12 de la colonne 1 est un filet de vis interne vissable dans le filet de vis externe.

4. Kit d'extraction rapide selon la revendication 3, dans lequel la colonne 1 présente une pluralité de nervures de renforcement 17 à une partie inférieure de l'espace intérieur ; une entrée 111 est formée à la partie supérieure du tube inférieur 11 ; les nervures de renforcement 17 sont disposées en cercle entourant l'entrée 111 du tube inférieur 11.

5. Kit d'extraction rapide selon la revendication 4, dans lequel une extrémité inférieure du tube inférieur 11 fait saillie à l'extérieur du tube de couplage 12.
